# EUROPÄISCHE PATENTSCHRIFT

(11) **EP 4 396 477 B1**
(45) Veröffentlichungstag und Bekanntmachung des Hinweises auf die Patenterteilung: **11.06.2025**
(21) Anmeldenummer: 22751386.8
(22) Anmeldetag: 19.07.2022
(51) Int. Cl.: F16J 15/34, G01M 13/005

(54) **GLEITRINGDICHTUNGSANORDNUNG MIT DREHMOMENTMESSEINRICHTUNG SOWIE VERFAHREN HIERZU**
MECHANICAL FACE SEAL ASSEMBLY HAVING A TORQUE-MEASURING DEVICE, AND METHOD THEREFOR
ENSEMBLE GARNITURE MÉCANIQUE D'ÉTANCHÉITÉ POURVU D'UN DISPOSITIF DE MESURE DE COUPLE, ET PROCÉDÉ ASSOCIÉ

(30) Priorität: 31.08.2021 DE 102021122476
(43) Veröffentlichungstag der Anmeldung: 10.07.2024
(73) Patentinhaber: EagleBurgmann Germany GmbH & Co. KG, 82515 Wolfratshausen (DE)
(72) Erfinder: DOTZER, Florian, 82335 Berg/Aufkirchen (DE); FESL, Andreas, 83624 Otterfing (DE); KLUSCH, Dieter, 82377 Penzberg (DE)
(74) Vertreter: Hoefer & Partner Patentanwälte mbB
(86) Internationale Anmeldenummer: PCT/EP2022/070217
(87) Internationale Veröffentlichungsnummer: WO 2023/030743

(56) Entgegenhaltungen:
- CN-A- 102 183 327
- DE-B3- 102018 206 219
- JP-A- H02 199 374
- US-A1- 2005 016 303

## Beschreibung

Die vorliegende Erfindung betrifft eine Gleitringdichtungsanordnung mit einer Drehmomentmesseinrichtung sowie ein Verfahren zum Überprüfen eines Verschleißes von Gleitflächen einer Gleitringdichtungsanordnung.

Gleitringdichtungsanordnungen aus dem Stand der Technik in unterschiedlichen Ausgestaltungen bekannt. Ein Problemkreis bei Gleitringdichtungsanordnungen ist die Bestimmung eines Verschleißzustandes der Gleitflächen der Gleitringe. Zwar ist die Gleitringdichtung im Normalbetrieb üblicherweise eine berührungslose Dichtung, wobei zwischen den Gleitflächen des stationären und des rotierenden Gleitrings ein Gaspolster oder ein Flüssigkeitspolster vorhanden ist, allerdings ergeben sich auch im Betrieb Situationen, bei denen ein Kontakt zwischen den Gleitringen vorhanden ist, beispielsweise beim Anfahren oder Abstellen der Maschine oder vom Zeitpunkt des Starts der Maschine bis zum Abheben der Gleitflächen. Auch können im Betrieb in Axialrichtung der Gleitringdichtung wirkende Druckstöße auftreten, welche einen Kontakt zwischen den Gleitflächen herstellen. Derartige Kontakte können jedoch die Gleitflächen beschädigen und einen Austausch der Gleitringe notwendig machen. Es ist bekannt, dass beispielsweise ein Verschleiß der Gleitflächen anhand einer Leckage über den Dichtspalt bestimmt wird. Es wäre jedoch wünschenswert, auch alternative Möglichkeiten zur Bestimmung eines Zustandes von Gleitflächen zu haben. Aus der US 2005 / 0 016 303 A1 ist eine Gleitringdichtungsanordnung gemäß dem Oberbegriff des Anspruchs 1 bekannt. Ferner zeigen die DE 10 2018 206 219 B3, die JP H02 199374 A und die CN 102 183 327 A Gleitringdichtungsanordnungen mit Sensoreinrichtungen zur Messung von verschiedenen Größen einer Gleitringdichtungsanordnung.

Es ist daher Aufgabe der vorliegenden Erfindung, eine Gleitringdichtungsanordnung sowie ein Verfahren zum Überprüfen eines Verschleißzustandes von Gleitflächen bereitzustellen, welche bei einfachem Aufbau und einfacher kostengünstiger Herstellbarkeit eine schnelle und sichere Verschleißbestimmung der Gleitflächen ermöglichen.

Diese Aufgabe wird durch eine Gleitringdichtungsanordnung mit den Merkmalen des Anspruchs 1 sowie ein Verfahren mit den Merkmalen des Anspruchs 11 gelöst. Die Unteransprüche zeigen jeweils bevorzugte Weiterbildungen der Erfindung.

Die erfindungsgemäße Gleitringdichtungsanordnung mit den Merkmalen des Anspruchs 1 weist demgegenüber den Vorteil auf, dass eine alternative und einfach auszuführende Verschleißerkennung an Gleitflächen eines rotierenden und/oder stationären Gleitrings einer Gleitringdichtung möglich ist. Insbesondere ist eine direkte Drehmomentmessung eines am stationären Gleitring anliegenden Drehmoments sowohl in einem Testbetrieb auf einem Prüfstand als auch im eingebauten Zustand der Gleitringdichtung zur Abdichtung an einer Welle oder dgl. möglich. Dies wird erfindungsgemäß dadurch erreicht, dass die Gleitringdichtungsanordnung eine Gleitringdichtung mit rotierendem und stationären Gleitring aufweist, welche zwischen ihren Gleitflächen einen Dichtspalt definieren. Ferner ist eine Drehmomentmesseinrichtung vorgesehen, welche eingerichtet ist, ein am stationären Gleitring anliegendes Drehmoment zu erfassen. Die Drehmomentmesseinrichtung umfasst dabei eine Messeinheit und einen Sensor. Die Messeinheit ist mit einem Fuß an einem Gehäuse der Gleitringdichtung fixiert und mit einem freien Ende in einer in einem Außenumfang des stationären Gleitrings ausgebildeten Nut angeordnet. Der Sensor ist eingerichtet, eine Positionsänderung der Messeinheit in der Nut zu erfassen. Die Positionsänderung der Messeinheit ist dabei ein Maß für das auf den stationären Gleitring ausgeübte Drehmoment. Der erfasste Drehmomentwert am stationären Gleitring gibt dabei Aufschluss über einen Verschleißzustand der Gleitflächen des rotierenden und stationären Gleitrings. Somit kann eine einfache und sichere Erfassung des Zustands der Gleitflächen ermöglicht werden und gegebenenfalls ein schneller Austausch der Gleitringe durchgeführt werden.

Insbesondere ermöglicht die erfindungsgemäße Drehmomentmesseinrichtung eine sichere Drehmomentmessung auch bei axialen Bewegungen des stationären Gleitrings, welche im Betrieb durch Druckstöße oder dgl. auftreten können.

Ferner umfasst die Gleitringdichtungsanordnung eine Steuereinrichtung, welche eingerichtet ist, basierend auf dem erfassten Drehmoment am stationären Gleitring auf einen Verschleiß der Gleitflächen der Gleitringdichtung zu schließen. Die Steuereinrichtung ist insbesondere bevorzugt eingerichtet, den Verschleiß der Gleitflächen der Gleitringe in Abhängigkeit einer Höhe des Drehmoments zu bestimmen. Hierbei kann beispielsweise ein Schwellenwert für ein Drehmoment in einer Datenbank hinterlegt sein und ein Vergleich des Schwellenwerts mit dem erfassten Drehmomentwert erfolgen. Wenn der Schwellenwert überschritten ist, ist dies ein Hinweis auf einen übermäßigen Verschleiß der Gleitflächen und die Steuereinheit kann beispielsweise ein Austauschsignal oder eine Austauschmeldung oder dgl. ausgeben.

Weiterhin ist die Steuereinrichtung eingerichtet, die Gleitringdichtungsanordnung derart zu betreiben, dass ein Kontakt an den Gleitflächen des rotierenden und stationären Gleitrings auftritt und die Drehmomentmesseinrichtung ein bei Kontakt der Gleitflächen auftretendes Kontaktdrehmoment erfasst und basierend auf dem Kontaktdrehmoment auf einen Verschleiß der Gleitflächen schließt. Die Bestimmung des Drehmoments bei einem Kontakt der Gleitflächen ist besonders aufschlussreich hinsichtlich eines Verschleißes der Gleitflächen. Dies kann beispielsweise bei einer niedrigen Drehzahl einer abzudichtenden Welle auftreten, wenn im Dichtspalt noch kein oder nicht ausreichend Medium für ein Abheben der Gleitflächen der Gleitringe vorhanden ist.

Somit kann eine sichere Drehmomenterfassung auch bei axial beweglichen stationären Gleitringen ermöglicht werden.

Vorzugsweise ist die Messeinheit als Flachstab ausgebildet. Die Messeinheit umfasst somit einen flachen, stabförmig ausgebildeten, einseitig fixierten Balken, dessen Länge größer ist als dessen Querschnittsabmessungen. Der Querschnitt des Flachstabs ist vorzugsweise rechteckig. Da das freie Ende des Flachstabs in der Nut im stationären Gleitring eingeordnet ist und der Fuß des Flachstabs am Gehäuse ortsfest fixiert ist, wird bei Einleitung eines Drehmoments auf den stationären Gleitring der stationäre Gleitring in Umfangsrichtung bewegt, so dass das freie Ende des Flachstabs bei Kontakt mit einer Nutwand eine Positionsänderung erfährt. Diese Positionsänderung ist ein Maß für das in den stationären Gleitring eingeleitete Drehmoment, aufgrund dessen dann auf einen Verschleiß der Gleitflächen der Gleitringe geschlossen werden kann.

Vorzugsweise ist am freien Ende an jeder Flachseite des Flachstabs jeweils ein vorstehender Bereich, insbesondere ein nockenförmiger Bereich, ausgebildet. Vorzugsweise weist der Flachstab dabei dann in der Nut eine Breite auf, welche nur minimal kleiner als die Nutbreite ist, so dass bei einer Einleitung eines Drehmoments in den stationären Gleitring gleich eine Ortsveränderung des freien Endes des Flachstabs erfolgt. Dadurch können auch kleine Drehmomente sicher erfasst werden.

Weiter bevorzugt weist der Fuß der Messeinheit eine größere Dicke auf als das freie Ende. Vorzugsweise ist die Dicke am Fuß der Messeinheit doppelt so groß wie die Dicke am freien Ende.

Besonders bevorzugt ist der Sensor der Drehmomentmesseinrichtung ein optischer Sensor. Der optische Sensor erfasst dabei Positionsänderungen des freien Endes der Messeinheit aufgrund des in den stationären Gleitrings eingeleiteten Drehmoments. Vorzugsweise ist der optische Sensor vom Reflexionstyp, welcher einen vom freien Ende der Messeinheit reflektierten Lichtstrahl, beispielsweise ein Laserstrahl, erfasst. Alternativ ist der optische Sensor ein optischer FBG-Sensor (Fiber Bragg Gitter). Die optischen Sensoren haben insbesondere den Vorteil, dass zur Messung an der Messeinheit kein elektrischer Strom notwendig ist, so dass diese vorzugsweise bei Abdichtungsaufgaben mit Explosionsgefahr oder ähnlichem eingesetzt werden. Wenn die Messeinheit als Flachstab ausgebildet ist, ist vorzugsweise an wenigstens einer Flachseite des Flachstabs eine spezielle Reflexionsfläche für den optischen Sensor ausgebildet. Hierdurch kann insbesondere eine Messgenauigkeit erhöht werden.

Alternativ ist der Sensor der Drehmomentmesseinrichtung ein Dehnungsmessstreifen (DMS). DMS-Sensoren sind sehr kostengünstig bereitstellbar und sehr robust aufgebaut. DMS-Sensoren können beispielsweise bei Abdichtungsaufgaben eingesetzt werden, wenn eine Vielzahl von Staubpartikeln oder ähnliches vorhanden ist, bei denen optische Messverfahren nur schlechte Ergebnisse liefern.

Weiter alternativ ist der Sensor der Drehmomentmesseinrichtung ein Piezoelement. Piezoelemente sind ebenfalls sehr robust und relativ kostengünstig bereitstellbar. Da auch bei Piezosensoren elektrischer Strom fließt, ist das Anwendungsgebiet üblicherweise auf gasförmige Medien beschränkt, bei denen kein elektrischer Kurzschluss auftritt.

Ein besonders einfacher und kostengünstiger Aufbau ist möglich, wenn die Nut im stationären Gleitring in Axialrichtung der Gleitringdichtungsanordnung verläuft. Die Nut ist somit parallel mit einer Mittelachse einer abzudichtenden Welle.

Weiter bevorzugt ist der stationäre Gleitring mittels einer Vorspanneinrichtung in Axialrichtung vorgespannt. Vorzugsweise ist hierbei ein Druckring zwischen der Vorspanneinrichtung und dem stationären Gleitring vorgesehen. Die Vorspanneinrichtung ist besonders bevorzugt eine Vielzahl von einzelnen Federelementen, welche entlang des Umfangs der Gleitringdichtung angeordnet sind.

Weiter bevorzugt ist die Steuereinheit eingerichtet, ein Losbrech-Drehmoment der Gleitringdichtung aus einem Stillstand der Gleitringdichtung zu erfassen. Im Stillstand der Gleitringdichtung berühren sich die Gleitflächen des rotierenden und stationären Gleitrings. Das Losbrech-Drehmoment ist dann erreicht, wenn sich der rotierende Gleitring gegenüber dem stationären Gleitring beginnt zu drehen. Dieses kann mit der erfindungsgemäßen Drehmomentmesseinrichtung sicher und einfach bestimmt werden. Auch hierbei gilt, je größer das Losbrech-Drehmoment der Gleitringdichtungsanordnung ist, umso mehr Verschleiß liegt an den Gleitflächen der Gleitringe vor. Bei Überschreiten eines Schwellenwerts für das Losbrech-Drehmoment kann dann ebenfalls wieder auf einen übermäßigen Verschleiß und einen notwendigen Austausch der Gleitringe geschlossen werden.

Weiterhin betrifft die vorliegende Erfindung ein Verfahren zum Überprüfen eines Verschleißes von Gleitflächen einer wie vorangehend beschriebenen, erfindungsgemäßen Gleitringdichtungsanordnung. Das Verfahren umfasst dabei die Schritte des Erfassens eines auf den stationären Gleitring wirkenden Drehmoments und des Vergleichens des erfassten Drehmoments mit einem gespeicherten Schwellenwert für das Drehmoment. Wenn das Drehmoment größer als der Schwellenwert für das Drehmoment ist, wird bestimmt, dass ein übermäßiger Verschleiß der Gleitflächen vorliegt. Das erfindungsgemäße Verfahren ermöglicht dabei die voranstehend beschriebenen Vorteile.

Weiter umfasst das Verfahren dabei die Schritte des Betreibens der Gleitringdichtungsanordnung mit einer Drehzahl derart, dass sich die Gleitflächen des rotierenden und stationären Gleitrings in Kontakt befinden. Dabei wird ein auf den stationären Gleitring bei Kontakt der Gleitflächen auftretendes Kontaktdrehmoment erfasst und das erfasste Kontaktdrehmoment mit einem gespeicherten Schwellenwert für das Kontaktdrehmoment verglichen. Wenn das Kontaktdrehmoment größer als der Schwellenwert ist, wird bestimmt, dass ein übermäßiger Verschleiß der Gleitflächen vorhanden ist. Dann kann vorzugsweise ein Signal oder eine Meldung ausgegeben werden und ein Austausch der Gleitringe erfolgen.

Besonders bevorzugt erfasst das erfindungsgemäße Verfahren ein Losbrech-Drehmoment aus einem Stillstand der Gleitringdichtung als Kontaktdrehmoment. Das Losbrech-Drehmoment ist wie vorangehend beschrieben, dabei der Drehmomentwert, bei welchem eine Relativrotation des rotierenden Gleitrings zum stationären Gleitring beginnt.

Vorzugsweise wird das Drehmoment am stationären Gleitring auch kontinuierlich während des Betriebs der Gleitringdichtung erfasst. Zwar herrscht beim Normalbetrieb der Gleitringdichtung kein direkter Kontakt an den Gleitflächen zwischen den Gleitringen, jedoch wird im Betrieb immer ein gewisses Drehmoment auf den stationären Gleitring ausgeübt, welches bei einem zunehmenden Verschleiß der Gleitflächen auch ansteigt. Von daher ist das erfasste Drehmoment im Betrieb ebenfalls ein Indikator für den Verschleiß der Gleitflächen der Gleitringe und ein Vergleich mit einem abgespeicherten Schwellenwert kann dann bei Überschreiten des Schwellenwerts der Hinweis auf den notwendigen Austausch der Gleitringe geben.

Nachfolgend werden unter Bezugnahme auf die begleitende Zeichnungen Ausführungsbeispiele der Erfindung im Detail beschrieben. In der Zeichnung ist:
- Fig. 1: eine schematische Schnittansicht einer Gleitringdichtungsanordnung gemäß einem ersten Ausführungsbeispiel der Erfindung,
- Fig. 2: eine schematische Teil-Draufsicht auf die Gleitringdichtungsanordnung von Fig. 1,
- Fig. 3: eine perspektivische Teil-Ansicht der Gleitringdichtungsanordnung von Fig. 1,
- Fig. 4: eine Teil-Seitenansicht der Gleitringdichtungsanordnung von Fig. 1,
- Fig. 5: eine schematische Schnittansicht einer Gleitringdichtungsanordnung gemäß einem zweiten Ausführungsbeispiel der Erfindung, und
- Fig. 6: eine schematische Schnittansicht einer Gleitringdichtungsanordnung gemäß einem dritten Ausführungsbeispiel der Erfindung.

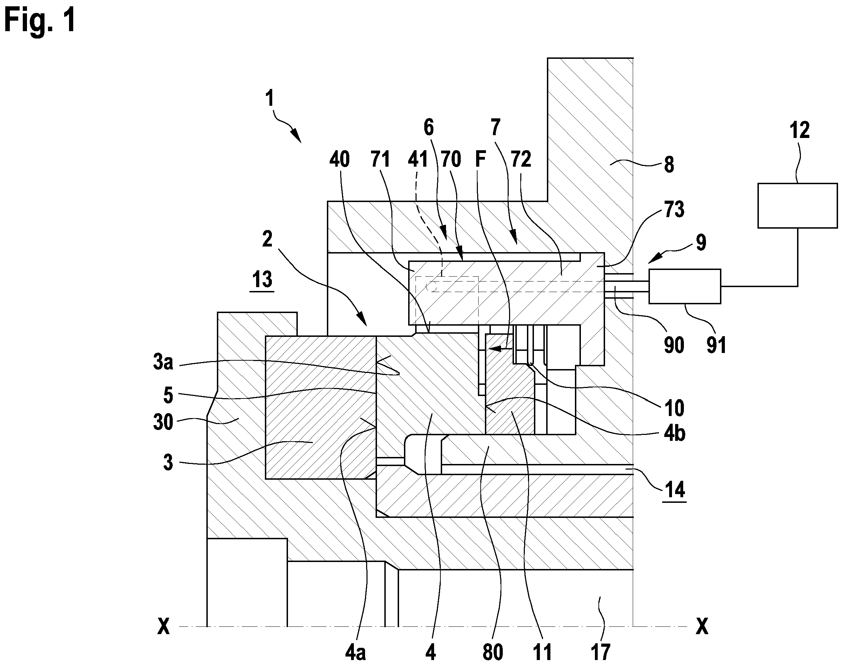

Nachfolgend wird unter Bezugnahme auf die Fig. 1 bis 4 eine Gleitringdichtungsanordnung 1 sowie ein Verfahren zum Überprüfen eines Verschleißes von Gleitflächen der Gleitringdichtungsanordnung im Detail beschrieben.

Die Gleitringdichtungsanordnung 1 umfasst, wie in Fig. 1 gezeigt, eine Gleitringdichtung 2 mit einem rotierenden Gleitring 3 und einem stationären Gleitring 4. Zwischen einer Gleitfläche 3a des rotierenden Gleitrings 3 und einer Gleitfläche 4a des stationären Gleitrings 4 ist ein Dichtspalt 5 definiert. Im Betrieb herrscht üblicherweise kein Kontakt zwischen den Gleitflächen 3a, 4a der Gleitringe.

Die Gleitringdichtungsanordnung 1 dichtet dabei an einer Welle 17 einen Produktbereich 13 von einem Atmosphärenbereich 14 ab.

Der rotierende Gleitring 3 ist mittels eines Gleitringträgers 30 mit der Welle 17 verbunden, so dass eine Rotation der Welle über den Gleitringträger 30 auf den rotierenden Gleitring 3 übertragen wird.

Der stationäre Gleitring 4 ist an einem Gehäuse 8 in nicht rotierbarer Weise angeordnet. Wie aus Fig. 1 ersichtlich ist, weist das Gehäuse 8 einen in Axialrichtung X-X der Gleitringdichtungsanordnung 1 verlaufenden Hülsenbereich 80 auf. Dabei ist der stationäre Gleitring 4 in Axialrichtung X-X auf dem Hülsenbereich 80 bewegbar. An einer Rückseite 4b des stationären Gleitrings 4 ist ein Druckring 11 vorgesehen, welcher mittels Vorspannelementen 10, insbesondere einer Vielzahl von Federelementen, in Axialrichtung X-X gegen den rotierenden Gleitring 3 vorgespannt wird.

Weiterhin umfasst die Gleitringdichtungsanordnung 1 eine Drehmomentmesseinrichtung 6. Die Drehmomentmesseinrichtung 6 ist im Detail aus den Fig. 1 bis 4 ersichtlich. Die Drehmomentmesseinrichtung 6 umfasst eine Messeinheit 7 und einen Sensor 9, welcher in diesem Ausführungsbeispiel ein optischer Sensor ist. Der Sensor 9 umfasst dabei einen Lichtleiter 90 und eine Lichtquelle-/Empfängeranordnung 91. Die Lichtquelle-/Empfängeranordnung 91 sendet ein Licht in den Lichtleiter 90 aus und empfängt eine entsprechende Reflexion.

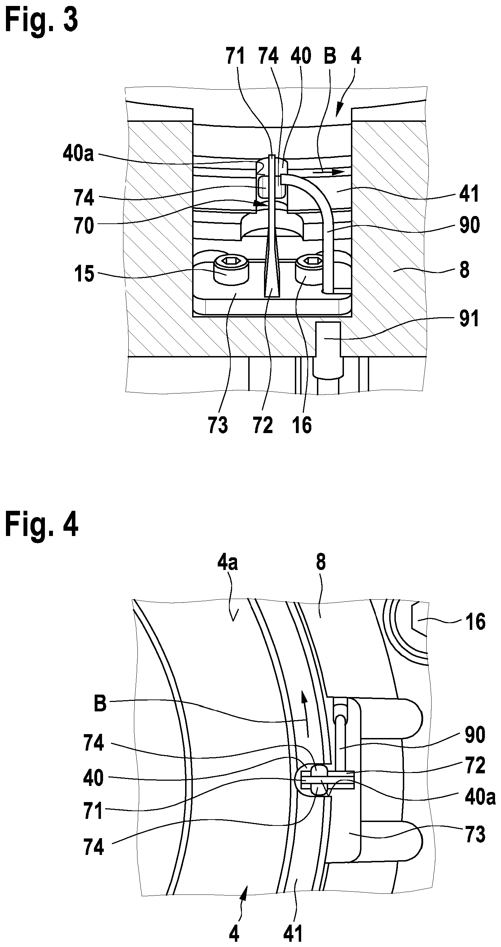

Die Messeinheit 7 ist im Detail in Zusammenschau aus den Fig. 1 und 3 ersichtlich. Die Messeinheit 7 umfasst einen Flachstab 70, welcher einseitig am Gehäuse 8 befestigt ist. Hierbei ist der Flachstab 70 mittels einer Basisplatte 73, die mit Schraubbolzen 15, 16 am Gehäuse 8 fixiert ist, einseitig befestigt. Ein freies Ende 71 des Flachstabs 70 ragt in eine Nut 40, welche an einem Außenumfang des stationären Gleitrings 4 ausgebildet ist. Ein mit der Basisplatte verbundener Fuß 72 weist eine größere Dicke als das freie Ende 71 auf (vgl. Fig. 3).

Wie insbesondere aus Fig. 1 ersichtlich ist, verläuft die Nut 40 in Axialrichtung X-X der Gleitringdichtungsanordnung 1. Wie weiter aus Fig. 1 ersichtlich ist, reicht dabei das freie Ende 71 in Axialrichtung X-X ausgehend von der Basisplatte 73 durch die gesamte Nut 40 hindurch und weist einen kleinen Überstand in Axialrichtung über die Nut 40 auf.

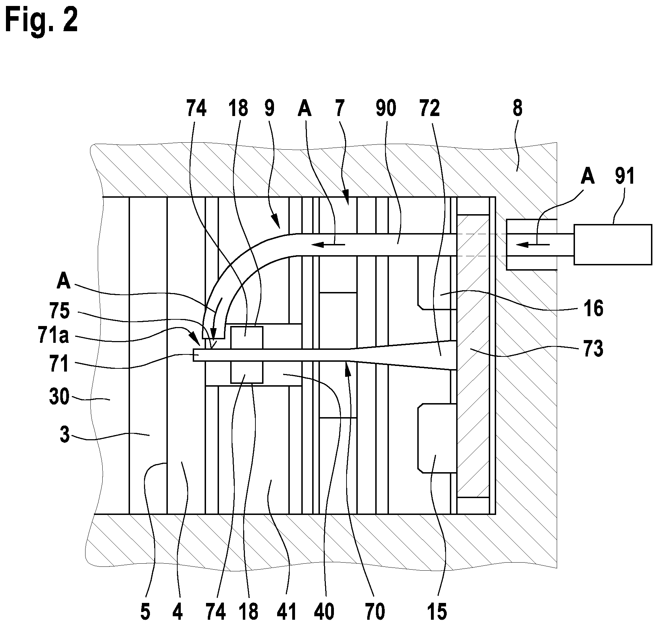

Wie in Fig. 1 gestrichelt dargestellt, ist auch der Lichtleiter 90 bis zur Nut 40 geführt, wobei der Lichtleiter 90 einen 90°-Bogen aufweist (vgl. Fig. 2). Hierbei ist an einer Flachseite 71a am freien Ende 71 des Flachstabs 70 eine Reflexionsfläche 75 vorgesehen (vgl. Fig. 2). Dadurch wird ein von der Lichtquelle-/Empfangsanordnung 91 ausgesandter Lichtstrahl (Pfeil A) reflektiert und zu dieser zurückgesendet.

Am Flachstab 70 sind ferner zu beiden Seiten vorstehende Bereiche 74 vorgesehen (vgl. insbesondere Fig. 2 und 3), welche ebenfalls in der Nut 40 angeordnet sind. Die vorstehenden Bereiche 74 sind dabei derart ausgelegt, dass ein kleiner Spalt 18 an beiden Seiten zu den Wänden der Nut 40 vorhanden ist (Fig. 2).

Da die Nut 40 geradlinig und parallel zur Axialrichtung X-X im stationären Gleitring 4 ausgebildet ist, kann der stationäre Gleitring 4 Axialbewegungen ausführen. Beispielsweise kann bei einer Bewegung der Welle 17 in Fig. 1 nach links, welche auch eine Bewegung des rotierenden Gleitrings 3 in Axialrichtung verursacht, ein Nachsetzen durch die von dem Vorspannelement 10 aufgebrachten Vorspannkraft F über den Druckring 11 ermöglicht werden. Wie aus Fig. 3 ersichtlich ist, bleibt dabei die Drehmomentmesseinrichtung 6, die am Gehäuse 8 fixiert ist, zwar ortsfest, jedoch sind Messaufnahmebereiche der Drehmomentmesseinrichtung 6 immer noch in der Nut 40 des stationären Gleitrings 4 angeordnet.

Die Funktion und das Messverfahren der Drehmomenterfassungseinrichtung 6 ist dabei wie folgt. Wenn im Normalbetrieb der Gleitringdichtungsanordnung 1, wenn im Dichtspalt 5 ein Medium vorhanden ist und kein Kontakt zwischen den Gleitflächen 3a, 4a der Gleitringe 3, 4 vorhanden ist, ein Drehmoment auf den stationären Gleitring 4 ausgeübt wird, was schematisch in Figur 4 durch den Pfeil B angedeutet ist, kommt eine Nutwand 40a der Nut 40 mit der Messeinheit 7, insbesondere einem der vorstehenden Bereiche 74 in Kontakt. Damit ist kein Spalt 18 mehr zwischen der Nutwand 40a und dem vorstehenden Bereich 74 vorhanden. Dadurch erfolgt eine Verformung des Flachstabs 70 mit entsprechender Positionsänderung der Messeinheit 7, insbesondere am freien Ende 71, so dass der Sensor 9, welcher kontinuierlich oder im Intervall einen Lichtstrahl A aussendet, eine Änderung einer Reflexion des Lichtstrahls erfassen kann. Die Reflexionsänderung kann dann durch den Sensor 9 erfasst werden. Der Sensor 9 ist mit einer Steuereinrichtung 12 verbunden, welche eine Auswertung des Sensorsignals vornimmt. Aus der Änderung des Sensorsignals kann auf das auf den stationären Gleitring 4 ausgeübte Drehmoment geschlossen werden.

Die Steuereinrichtung 12 ist dabei ferner eingerichtet, den so ermittelten Drehmomentwert mit einem Schwellenwert für das Drehmoment zu vergleichen. Wenn der ermittelte Drehmomentwert über dem Schwellenwert liegt, ist dies ein deutlicher Hinweis auf einen Verschleiß an den Gleitflächen 3a, 4a, da bei nicht verschlissenen Gleitflächen 3a, 4a, eine Drehmomentübertragung vom rotierenden Gleitring 3 auf den stationären Gleitring 4 viel geringer ist, als bei Gleitflächen, welche einen Verschleiß, beispielsweise Riefen oder Welligkeiten oder dgl., aufweisen, haben.

Auch bei einem Kontakt zwischen dem rotierenden Gleitring und dem stationären Gleitring an den Gleitflächen 3a, 4a, beispielsweise bei einem Stillstand der Welle 17 oder einer sehr geringen Drehzahl, bei der noch ein Kontakt an den Gleitflächen 3a, 4a vorhanden ist, kann eine Drehmomentmessung erfolgen. Bei verschlissenen Gleitringen hält der Kontakt zwischen den Gleitflächen länger an, als bei neuwertigen Gleitflächen. Somit ist ein vom rotierenden Gleitring 3 auf den stationären Gleitring 4 übertragenes Drehmoment deutlich größer als bei neuwertigen Gleitringen, welche keinen Verschleiß und keine Welligkeit aufweisen. Insbesondere kann aus einem Stillstand der Welle 17 auch ein Losbrech-Drehmoment erfasst werden, welches bei verschlissenen Gleitflächen ebenfalls deutlich größer ist als bei Gleitfläche ohne oder nur mit geringem Verschleiß.

Wie insbesondere aus Fig. 1 und 4 weiter ersichtlich ist, weist der stationäre Gleitring 4 einen radial nach außen gerichteten, umlaufenden Flanschbereich 41 auf, in welchem die Nut 40 gebildet ist. Der Flanschbereich 41 weist dabei keine Gleitfläche auf (vgl. auch Fig. 4).

Die somit bei Drehmomentübertragungen vom rotierenden Gleitring 3 auf den stationären Gleitring 4 ausgebildete Kraft in Umfangsrichtung wirkt auf den Flachstab 70, so dass dieser auf Biegung beansprucht wird und sich verformt. Diese Verformung kann durch eine optische Wegmessung erfasst werden. Die Steuereinrichtung 12 ist z.B. dabei eingerichtet, basierend auf den bekannten Materialparametern der Messeinheit 7 eine Kraft auf die Messeinheit 7 zu bestimmen und dann basierend auf der bekannten Gleitringgeometrie das am stationären Gleitring 4 anliegende Drehmoment zu berechnen.

Durch die axiale Anordnung der Nut 40 kann dabei unabhängig von einer Axialposition des stationären Gleitrings 4 immer das am stationären Gleitring 4 anliegende Drehmoment erfasst werden. Die Messeinheit 7 ist vorzugsweise aus Edelstahl hergestellt.

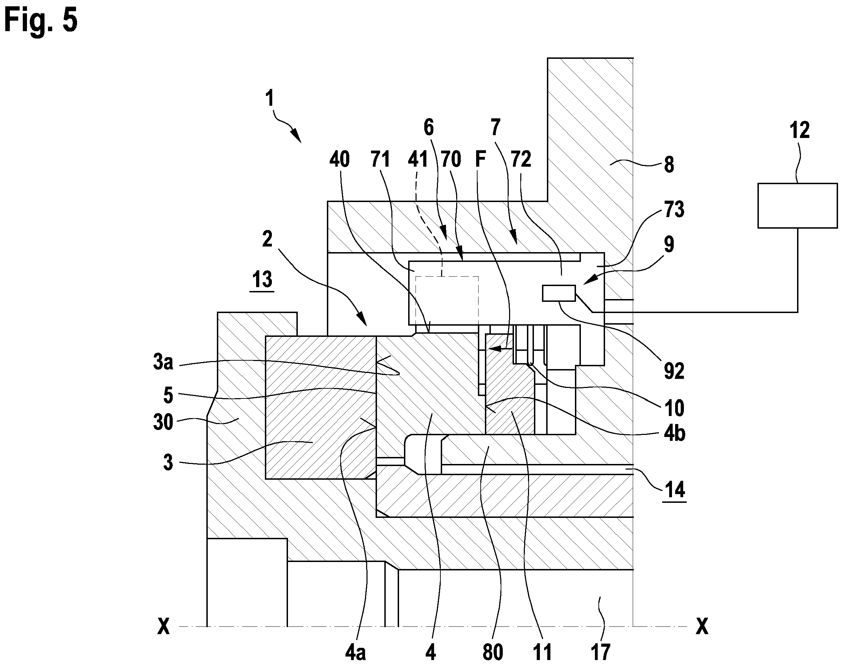

Fig. 5 zeigt eine Gleitringdichtungsanordnung 1 gemäß einem zweiten Ausführungsbeispiel der Erfindung. Gleiche bzw. funktional gleiche Teile sind mit den gleichen Bezugszeichen wie im ersten Ausführungsbeispiel bezeichnet. Das zweite Ausführungsbeispiel entspricht im Wesentlichen dem ersten Ausführungsbeispiel, wobei statt eines optischen Sensors beim zweiten Ausführungsbeispiel als Sensor 9 ein Dehnungsmessstreifen 92 verwendet wird. Wie in Fig. 5 gezeigt, ist der Dehnungsmessstreifen 92 am Bereich des Fußes 72 des Flachstabs 70 angeordnet. Wenn ein Drehmoment auf den stationären Gleitring 4 übertragen wird, erfolgt wie im ersten Ausführungsbeispiel eine Krafteinleitung auf das freie Ende 71 des Flachstabs 70 der Messeinheit 7, so dass sich ein elektrischer Widerstand des Dehnungsmessstreifens 92 in Abhängigkeit der Größe der Biegung des Flachstabs 70 ändert. Diese Änderung kann mittels der Steuereinrichtung 12 erfasst werden und daraus die auf die Messeinheit 7 wirkende Kraft aufgrund des in den stationären Gleitring 4 eingeleitete Drehmoment ermittelt werden. Ansonsten entspricht dieses Ausführungsbeispiel dem vorhergehenden Ausführungsbeispiel, so dass auf die dort gegebene Beschreibung verwiesen werden kann. Alternativ kann an der Position des Dehnungsmessstreifens 92 auch ein optischer FBG-Sensor verwendet werden.

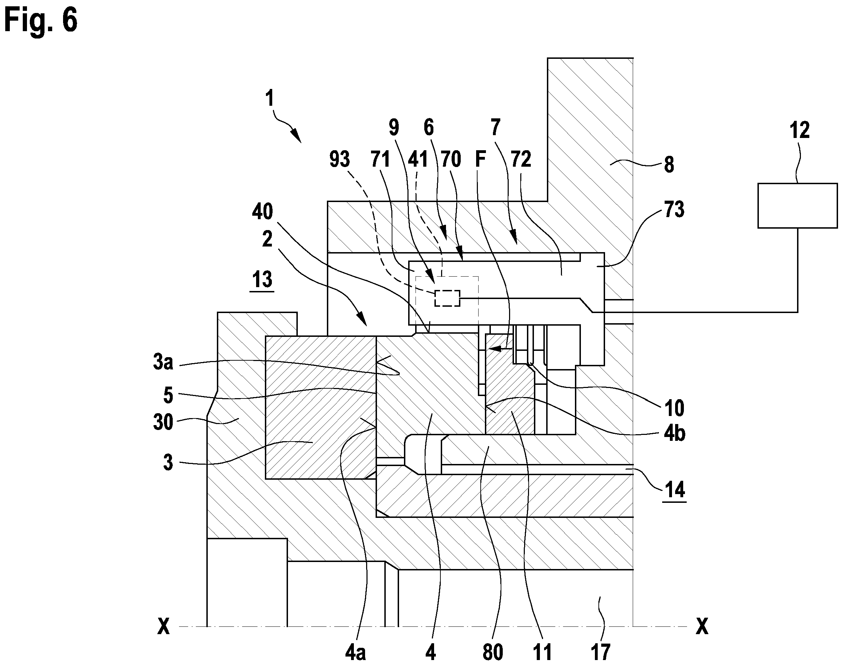

Fig. 6 zeigt eine Gleitringdichtungsanordnung 1 gemäß einem dritten Ausführungsbeispiel der Erfindung. Gleiche bzw. funktional gleiche Teile sind mit den gleichen Bezugszeichen wie in den vorhergehenden Ausführungsbeispielen bezeichnet. Beim dritten Ausführungsbeispiel ist als Sensor 9 eine Piezosensor 93 an einer Nutwand 40a der Nut 40 angeordnet. Wenn ein Drehmoment vom rotierenden Gleitring 3 auf den stationären Gleitring 4 übertragen wird, erfolgt eine Kraftübertragung auf die Messeinheit 7, welche sich insbesondere im Bereich des freien Endes 71 verbiegt. Dadurch kann eine Kraft auf den Piezosensor 93 ausgeübt werden, wodurch sich dessen elektrischer Widerstand ändert, was durch die Steuereinrichtung 12 erfassbar ist. Die Steuereinrichtung 12 kann dann basierend auf dem geänderten elektrischen Widerstand des Piezosensors 93 die auf diesen ausgeübte Kraft und damit auf das Drehmoment bestimmt werden. Um eine drehrichtungsunabhängige Erfassung des Drehmoments zu ermöglichen, sind vorzugsweise an beiden Nutwänden der Nut 40 Piezosensoren 93 angeordnet. Ansonsten entspricht dieses Ausführungsbeispiel den vorhergehenden Ausführungsbeispielen, so dass auf die dort gegebene Beschreibung verwiesen werden kann.

Das erfindungsgemäße Verfahren zum Überprüfen eines Verschleißzustands von Gleitflächen 3a, 4a wird in allen beschriebenen Ausführungsbeispielen dabei insbesondere bei einem Kontakt zwischen den Gleitflächen der Gleitringe ausgeübt. Durch die in den Ausführungsbeispielen beschriebenen verschiedenen Sensoren 9 der Drehmomenterfassungseinrichtung 6 kann somit bei Kontakt der Gleitflächen ein Kontaktdrehmoment erfasst werden. Dieses Kontaktdrehmoment wird dann mit einem in der Steuereinrichtung 12 gespeicherten Schwellenwert verglichen. Sobald das Kontaktdrehmoment größer als der Schwellenwert ist, bestimmt die Steuereinrichtung 12 dann, dass ein übermäßiger Verschleiß der Gleitflächen 3a, 4a der Gleitringe vorhanden ist. Hier kann dann beispielsweise ein Signal oder eine Meldung ausgegeben werden, welche auf den zu großen Verschleiß hinweist und einen Austausch der Gleitringe empfiehlt.

Weiterhin kann durch das erfindungsgemäße Verfahren insbesondere ein Losbrech-Drehmoment der Gleitflächen aus einem Stillstand der Welle 17 erfasst werden. Wenn das Losbrech-Drehmoment ebenfalls größer als ein vorbestimmter Schwellenwert für das Losbrech-Drehmoment ist, kann ebenfalls auf einen übermäßigen Verschleiß der Gleitflächen geschlossen werden und entsprechende Hinweise durch die Steuereinrichtung 12 ausgegeben werden.

### Bezugszeichenliste

- 1: Gleitringdichtungsanordnung
- 2: Gleitringdichtung
- 3: rotierender Gleitring
- 3a: Gleitfläche des rotierenden Gleitrings
- 4: stationärer Gleitring
- 4a: Gleitfläche des rotierenden Gleitrings
- 4b: Rückseite des stationären Gleitrings
- 5: Dichtspalt
- 6: Drehmomentmesseinrichtung
- 7: Messeinheit
- 8: Gehäuse
- 9: Sensor
- 10: Vorspannelement
- 11: Druckring
- 12: Steuereinrichtung
- 13: Produktbereich
- 14: Atmosphärenbereich
- 15, 16: Schraubbolzen
- 17: Welle
- 18: Spalt zwischen Nutwand und Messeinheit
- 30: Gleitringträger
- 40: Nut
- 40a: Nutwand
- 41: Flanschbereich
- 70: Flachstab
- 71: freies Ende
- 71a: Flachseite
- 72: Fuß des Flachstabs
- 73: Basisplatte
- 74: vorstehender Bereich
- 75: Reflexionsfläche
- 80: Hülsenbereich
- 90: Lichtleiter
- 91: Lichtquelle-/Empfängeranordnung
- 92: Dehnungsmessstreifen
- 93: Piezosensor
- A: Lichtstrahl
- B: in den stationären Gleitring eingeleitete Kraft
- F: Vorspannkraft
- X-X: Axialrichtung

## Patentansprüche

1. Gleitringdichtungsanordnung, umfassend:
- eine Gleitringdichtung (2) mit einem rotierenden Gleitring (3) und einem stationären Gleitring (4), welche zwischen ihren Gleitflächen (3a, 4a) einen Dichtspalt (5) definieren, und
- eine Drehmomentmesseinrichtung (6), welche eingerichtet ist, ein am stationären Gleitring (4) anliegendes Drehmoment zu erfassen,
- **dadurch gekennzeichnet, dass** die Drehmomentmesseinrichtung (6) eine Messeinheit (7) und einen Sensor (9) umfasst, wobei die Messeinheit (7) mit einem Fuß (72) an einem Gehäuse (8) fixiert ist und ein freies Ende (71) aufweist, welches in einer in einem Außenumfang des stationären Gleitrings (4) ausgebildeten Nut (40) vorsteht, und
- wobei der Sensor (9) eingerichtet ist, eine Positionsänderung der Messeinheit (7) in der Nut (40) zu erfassen,
- eine Steuereinrichtung (12), welche eingerichtet ist, basierend auf dem erfassten Drehmoment am stationären Gleitring (4) auf einen Verschleiß der Gleitflächen (3a, 4a) der Gleitringdichtung (2) zu schließen, und
- wobei die Steuereinrichtung (12) ferner eingerichtet ist, die Gleitringdichtungsanordnung (1) derart zu betreiben, dass ein Kontakt an den Gleitflächen (3a, 4a) zwischen dem rotierenden Gleitring (3) und dem stationären Gleitring (4) auftritt und weiter eingerichtet ist, ein bei Kontakt der Gleitflächen (3a, 4a) auftretendes Kontaktdrehmoment zu erfassen und basierend auf dem Kontaktdrehmoment auf einen Verschleiß der Gleitflächen zu schließen.

2. Gleitringdichtungsanordnung nach Anspruch 1, wobei die Messeinheit (7) einen einseitig fixierten Flachstab (70) aufweist.

3. Gleitringdichtungsanordnung nach einem der vorhergehenden Ansprüche, wobei am freien Ende (71) der Messeinheit (7) an jeder zu einer Nutwand (40a) der Nut (40) gerichteten Seite ein vorstehender Bereich (74) ausgebildet ist.

4. Gleitringdichtungsanordnung nach einem der vorhergehenden Ansprüche, wobei der Fuß (72) der Messeinheit (7) eine größere Dicke aufweist als das freie Ende (71).

5. Gleitringdichtungsanordnung nach einem der vorhergehenden Ansprüche, wobei der Sensor (9) ein optischer Sensor ist.

6. Gleitringdichtungsanordnung nach Anspruch 5, wobei an der Messeinheit (7) eine Reflexionsfläche (75) für den optischen Sensor ausgebildet ist.

7. Gleitringdichtungsanordnung nach einem der Ansprüche 1 bis 4, wobei der Sensor (9) einen Dehnungsmessstreifen (92) umfasst, welcher an der Messeinheit (7) angeordnet ist.

8. Gleitringdichtungsanordnung nach einem der Ansprüche 1 bis 4, wobei der Sensor (9) einen Piezosensor (93) umfasst, welcher in der Nut (40) an der Nutwand (40a) angeordnet ist.

9. Gleitringdichtungsanordnung nach einem der vorhergehenden Ansprüche,
- wobei die Nut (40) in Axialrichtung (X-X) der Gleitringdichtungsanordnung (1) verläuft und/oder
- wobei der stationäre Gleitring (4) mittels eines Vorspannelements (10) in Axialrichtung (X-X) vorgespannt ist.

10. Gleitringdichtungsanordnung nach Anspruch 1, wobei die Steuereinrichtung (12) ferner eingerichtet ist, den Verschleiß der Gleitflächen (3a, 4a) basierend auf einem Vergleich des erfassten Drehmomentwerts mit einem Schwellenwert zu bestimmen, wenn der erfasste Drehmomentwert größer als der Schwellenwert ist.

11. Verfahren zum Überprüfen eines Verschleißes von Gleitflächen (3a, 4a) einer Gleitringdichtungsanordnung, umfassend:
- eine Gleitringdichtung (2) mit einem rotierenden Gleitring (3) und einem stationären Gleitring (4), welche zwischen ihren Gleitflächen (3a, 4a) einen Dichtspalt (5) definieren, und
- eine Drehmomentmesseinrichtung (6), welche eingerichtet ist, ein am stationären Gleitring (4) anliegendes Drehmoment zu erfassen,
- wobei die Drehmomentmesseinrichtung (6) eine Messeinheit (7) und einen Sensor (9) umfasst, wobei die Messeinheit (7) mit einem Fuß (72) an einem Gehäuse (8) fixiert ist und ein freies Ende (71) aufweist, welches in einer in einem Außenumfang des stationären Gleitrings (4) ausgebildeten Nut (40) vorsteht, und
- wobei der Sensor (9) eingerichtet ist, eine Positionsänderung der Messeinheit (7) in der Nut (40) zu erfassen,
umfassend die Schritte:
- Betreiben der Gleitringdichtungsanordnung,
- Erfassen eines auf den stationären Gleitring (4) wirkenden Drehmoments, und
- Vergleichen des erfassen Drehmoments mit einem gespeicherten Schwellenwert für das Drehmoment,
- wobei, wenn das Drehmoment größer als der Schwellenwert für das Drehmoment ist, bestimmt wird, dass ein übermäßiger Verschleiß der Gleitflächen (3a, 4a) vorliegt,
- Betreiben der Gleitringdichtungsanordnung mit einer Drehzahl derart, dass sich die Gleitflächen (3a, 4a) des rotierenden Gleitrings (3) und des stationären Gleitrings (4) in Kontakt befinden,
- Erfassen eines auf den stationären Gleitring (4) bei Kontakt der Gleitflächen auftretenden Kontaktdrehmoments, und
- Vergleich des Kontaktdrehmoments mit einem gespeicherten Schwellenwert für das Kontaktdrehmoment,
- wobei, wenn das Kontaktdrehmoment größer als der Schwellenwert für das Kontaktdrehmoment ist, bestimmt wird, dass ein übermäßiger Verschleiß der Gleitflächen (3a, 4a) vorhanden ist.

12. Verfahren nach Anspruch 11, wobei ein Losbrech-Drehmoment der Gleitflächen, ausgehend aus einem Stillstand der Gleitringdichtung (2) erfasst wird und mit einem Schwellenwert für das Losbrech-Drehmoment verglichen wird und wenn das Losbrech-Drehmoment größer als der Schwellenwert für das Losbrech-Drehmoment ist, bestimmt wird, dass ein übermäßiger Verschleiß der Gleitflächen (3a, 4a) vorhanden ist.

## Claims

1. Mechanical seal assembly, comprising:
- a mechanical seal (2) comprising a rotating slide ring (3) and a stationary slide ring (4) which define a sealing gap (5) between their sliding surfaces (3a, 4a), and
- a torque meter (6) which is configured to detect a torque acting on the stationary slide ring (4),
- **characterized in that** the torque meter (6) comprises a measuring unit (7) and a sensor (9), wherein the measuring unit (7) is fixed by a foot (72) to a housing (8) and comprises a free end (71) which protrudes in a groove (40) formed in an outer periphery of the stationary slide ring (4), and
- wherein the sensor (9) is configured to detect a position change of the measuring unit (7) in the groove (40)
- a controller (12) which is configured to conclude a wear of the sliding surfaces (3a, 4a) of the mechanical seal (2) based on the detected torque on the stationary slide ring (4), and
- wherein the controller (12) is furthermore configured to operate the mechanical seal assembly (1) in such a way that contact between the rotating slide ring (3) and the stationary slide ring (4) occurs at the sliding surfaces (3a, 4a), and is further configured to detect a contact torque arising upon contact of the sliding surfaces (3a, 4a), and to conclude a wear of the sliding surfaces based on the contact torque.

2. Mechanical seal assembly according to claim 1, wherein the measuring unit (7) comprises a flat rod (70) that is fixed at one end.

3. Mechanical seal assembly according to any of the preceding claims, wherein a protruding region (74) is formed on the free end (71) of the measuring unit (7), on each side facing towards a groove wall (40a) of the groove (40).

4. Mechanical seal assembly according to any of the preceding claims, wherein the foot (72) of the measuring unit (7) is of a greater thickness than the free end (71).

5. Mechanical seal assembly according to any of the preceding claims, wherein the sensor (9) is an optical sensor.

6. Mechanical seal assembly according to claim 5, wherein a reflective surface (75) for the optical sensor is formed on the measuring unit (7).

7. Mechanical seal assembly according to any of claims 1 to 4, wherein the sensor (9) comprises a strain gauge (92) which is arranged on the measuring unit (7).

8. Mechanical seal assembly according to any of claims 1 to 4, wherein the sensor (9) comprises a piezo sensor (93) which is arranged in the groove (40), on the groove wall (40a).

9. Mechanical seal assembly according to any of the preceding claims,
- wherein the groove (40) extends in the axial direction (X-X) of the mechanical seal assembly (1), and/or
- wherein the stationary slide ring (4) is preloaded in the axial direction (X-X) by means of a preload element (10).

10. Mechanical seal assembly according to claim 1, wherein the controller (12) is furthermore configured to determine the wear of the sliding surfaces (3a, 4a) based on a comparison of the detected torque value with a threshold value, if the detected torque value is greater than the threshold value.

11. Method for examining wear of sliding surfaces (3a, 4a) of a mechanical seal assembly, comprising:
- a mechanical seal (2) comprising a rotating slide ring (3) and a stationary slide ring (4) which define a sealing gap (5) between their sliding surfaces (3a, 4a), and
- a torque meter (6) which is configured to detect a torque acting on the stationary slide ring (4),
- wherein the torque meter (6) comprises a measuring unit (7) and a sensor (9), wherein the measuring unit (7) is fixed by a foot (72) to a housing (8) and comprises a free end (71) which protrudes in a groove (40) formed in an outer periphery of the stationary slide ring (4), and
- wherein the sensor (9) is configured to detect a position change of the measuring unit (7) in the groove (40),
comprising the steps of:
- operating the mechanical seal assembly,
- detecting a torque acting on the stationary slide ring (4), and
- comparing the detected torque with a stored threshold value for the torque,
- wherein, if the torque is greater than the threshold value for the torque, it is determined that there is excessive wear of the sliding surfaces (3a, 4a),
- operating the mechanical seal assembly at a rotating speed such that the sliding surfaces (3a, 4a) of the rotating slide ring (3) and of the stationary slide ring (4) are in contact,
- detecting a contact torque occurring on the stationary slide ring (4) upon contact of the sliding surfaces, and
- comparing the contact torque with a stored threshold value for the contact torque,
- wherein, if the contact torque is greater than the threshold value for the contact torque, it is determined that there is excessive wear of the sliding surfaces (3a, 4a).

12. Method according to claim 11, wherein a breakaway torque of the sliding surfaces is detected proceeding from a standstill of the mechanical seal (2) and is compared with a threshold value for the breakaway torque and, if the breakaway torque is greater than the threshold value for the breakaway torque, it is determined that there is excessive wear of the sliding surfaces (3a, 4a).

## Revendications

1. Ensemble à garniture mécanique d'étanchéité, comprenant :
- une garniture mécanique d'étanchéité (2) avec un anneau de glissement rotatif (3) et un anneau de glissement fixe (4), lesquels définissent entre leurs surfaces de glissement (3a, 4a) une fente d'étanchéité (5), et
- un dispositif de mesure de couple de rotation (6), qui est configuré pour détecter un couple de rotation appliqué sur l'anneau de glissement fixe (4),
- **caractérisé en ce que** le dispositif de mesure de couple de rotation (6) comprend une unité de mesure (7) et un capteur (9), dans lequel l'unité de mesure (7) est fixée par un pied (72) sur un boîtier (8) et présente une extrémité libre (71) qui fait saillie dans une rainure (40) réalisée dans une périphérie extérieure de l'anneau de glissement fixe (4), et
- dans lequel le capteur (9) est configuré pour détecter un changement de position de l'unité de mesure (7) dans la rainure (40),
- un dispositif de commande (12) qui est configuré pour conclure à une usure des surfaces de glissement (3a, 4a) de la garniture mécanique d'étanchéité (2) sur la base du couple de rotation détecté sur l'anneau de glissement fixe (4), et
- dans lequel le dispositif de commande (12) est en outre configuré pour faire fonctionner l'ensemble à garniture mécanique d'étanchéité (1) de telle manière qu'un contact se produit sur les surfaces de glissement (3a, 4a) entre l'anneau de glissement rotatif (3) et l'anneau de glissement fixe (4) et est par ailleurs configuré pour détecter un couple de rotation de contact se produisant lors du contact des surfaces de glissement (3a, 4a) et pour conclure à une usure des surfaces de glissement sur la base du couple de rotation de contact.

2. Ensemble à garniture mécanique d'étanchéité selon la revendication 1, dans lequel l'unité de mesure (7) présente une tige plate (70) fixée d'un côté.

3. Ensemble à garniture mécanique d'étanchéité selon l'une quelconque des revendications précédentes, dans lequel une zone saillante (74) est réalisée sur l'extrémité libre (71) de l'unité de mesure (7) sur chaque côté dirigé vers une paroi de rainure (40a) de la rainure (40).

4. Ensemble à garniture mécanique d'étanchéité selon l'une quelconque des revendications précédentes, dans lequel le pied (72) de l'unité de mesure (7) présente une épaisseur supérieure à celle de l'extrémité libre (71).

5. Ensemble à garniture mécanique d'étanchéité selon l'une quelconque des revendications précédentes, dans lequel le capteur (9) est un capteur optique.

6. Ensemble à garniture mécanique d'étanchéité selon la revendication 5, dans lequel une surface de réflexion (75) est réalisée sur l'unité de mesure (7) pour le capteur optique.

7. Ensemble à garniture mécanique d'étanchéité selon l'une quelconque des revendications 1 à 4, dans lequel le capteur (9) comprend une jauge de contrainte (92) qui est disposée sur l'unité de mesure (7).

8. Ensemble à garniture mécanique d'étanchéité selon l'une quelconque des revendications 1 à 4, dans lequel le capteur (9) comprend un capteur piézoélectrique (93) qui est disposé dans la rainure (40) sur la paroi de rainure (40a).

9. Ensemble à garniture mécanique d'étanchéité selon l'une quelconque des revendications précédentes,
- dans lequel la rainure (40) s'étend dans la direction axiale (X-X) de l'ensemble à garniture mécanique d'étanchéité (1) et/ou
- dans lequel l'anneau de glissement fixe (4) est précontraint au moyen d'un élément de précontrainte (10) dans la direction axiale (X-X).

10. Ensemble à garniture mécanique d'étanchéité selon la revendication 1, dans lequel le dispositif de commande (12) est en outre configuré pour déterminer l'usure des surfaces de glissement (3a, 4a) sur la base d'une comparaison de la valeur de couple de rotation détectée avec une valeur de seuil lorsque la valeur de couple de rotation détectée est supérieure à la valeur de seuil.

11. Procédé de vérification d'une usure de surfaces de glissement (3a, 4a) d'un ensemble à garniture mécanique d'étanchéité, comprenant :
- une garniture mécanique d'étanchéité (2) avec un anneau de glissement rotatif (3) et un anneau de glissement fixe (4), lesquels définissent entre leurs surfaces de glissement (3a, 4a) une fente d'étanchéité (5), et
- un dispositif de mesure de couple de rotation (6), qui est configuré pour détecter un couple de rotation appliqué sur l'anneau de glissement fixe (4),
- dans lequel le dispositif de mesure de couple de rotation (6) comprend une unité de mesure (7) et un capteur (9), dans lequel l'unité de mesure (7) est fixée par un pied (72) sur un boîtier (8) et présente une extrémité libre (71), qui fait saillie dans une rainure (40) réalisée dans une périphérie extérieure de l'anneau de glissement fixe (4), et
- dans lequel le capteur (9) est configuré pour détecter un changement de position de l'unité de mesure (7) dans la rainure (40),
comprenant les étapes :
- de fonctionnement de la garniture mécanique d'étanchéité,
- de détection d'un couple de rotation agissant sur l'anneau de glissement fixe (4), et
- de comparaison du couple de rotation détecté à une valeur de seuil mémorisée pour le couple de rotation,
- dans lequel, lorsque le couple de rotation est supérieur à la valeur de seuil du couple de rotation, on détermine qu'il existe une usure excessive des surfaces de glissement (3a, 4a),
- de fonctionnement de l'ensemble à garniture mécanique d'étanchéité à une vitesse de rotation de telle manière que les surfaces de glissement (3a, 4a) de l'anneau de glissement rotatif (3) et de l'anneau de glissement fixe (4) se trouvent en contact,
- de détection d'un couple de rotation de contact se produisant sur l'anneau de glissement fixe (4) lors du contact des surfaces de glissement, et
- de comparaison du couple de rotation de contact à une valeur de seuil mémorisée du couple de rotation de contact,
- dans lequel, lorsque le couple de rotation de contact est supérieur à la valeur de seuil du couple de rotation de contact, on détermine qu'il existe une usure excessive des surfaces de glissement (3a, 4a).

12. Procédé selon la revendication 11, dans lequel un couple de rotation de décollage des surfaces de glissement est détecté à partir d'un arrêt de la garniture mécanique d'étanchéité (2) et est comparé à une valeur de seuil du couple de rotation de décollage et, lorsque le couple de rotation de décollage est supérieur à la valeur de seuil du couple de rotation de décollage, on détermine qu'une usure excessive des surfaces de glissement (3a, 4a) est présente.
